# EUROPEAN PATENT APPLICATION

(11) **EP 4 487 671 A1**
(43) Date of publication of application: **08.01.2025**
(21) Application number: 23183939.0
(22) Date of filing: 06.07.2023
(51) Int. Cl.: A01D 41/12, A01F 12/40, A01M 21/00

(54) **PLANT SEED ATTENUATION SYSTEM FOR AN AGRICULTURAL VEHICLE**

(71) Applicant: CNH Industrial Belgium N.V., 8210 Zedelgem (BE)
(72) Inventor: Missotten, Bart M.A., 8210 Zedelgem (BE); Jongmans, Dré W.J., 8210 Zedelgem (BE); Somers, Tom N.N., 8210 Zedelgem (BE)
(74) Representative: CNH Industrial IP Department

(57) **Abstract**

A plant seed attenuation system (200) includes: a housing (210, 710); and a conveyor (220, 711A, 711B) disposed in the housing (210, 710) and configured to convey plant material, the conveyor (220, 711A, 711B) preferably including a rotatable shaft (221, 712) and at least one flighting (222, 713, 714, 715) coupled to the shaft (221, 712) and configured to convey plant material as the shaft (221, 712) rotates. A heater (310, 510, 711A, 711B) is associated with the conveyor (220, 711A, 711B) and is configured to heat plant material conveyed by the conveyor (220, 711A, 711B) to a seed attenuation temperature that is effective to reduce the viability of a plant seed conveyed by the conveyor (220, 711A, 711B).

## Description

### FIELD OF THE INVENTION

The present invention pertains to attenuation systems and, more specifically, to plant seed attenuation systems that may be incorporated in agricultural vehicles.

### BACKGROUND OF THE INVENTION

Many different types of work vehicles are known. One exemplary class of work vehicles is agricultural harvesters. An agricultural harvester known as a "combine" is historically termed such because it combines multiple harvesting functions with a single harvesting unit, such as picking, threshing, separating, and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris toward the rear of the combine. Non-grain crop material such as straw from the threshing section proceeds through a residue handling system, which may utilize a straw chopper to process the non-grain material and direct it out the rear of the combine. When the grain tank becomes full, the combine is positioned adjacent a vehicle into which the grain is to be unloaded, such as a semi-trailer, gravity box, straight truck, or the like, and an unloading system on the combine is actuated to transfer the grain into the vehicle.

More particularly, a rotary threshing or separating system includes one or more rotors that can extend axially (front to rear) or transversely (side to side) within the body of the combine, and which are partially or fully surrounded by perforated concaves. The crop material is threshed and separated by the rotation of the rotor within the concaves. Coarser non-grain crop material such as stalks and leaves may pass through a straw beater to remove any remaining grains, and then are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through vertically arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve), where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material which passes through the upper sieve, but does not pass through the lower sieve, is directed to a tailings pan. Grain falling through the lower sieve lands on a bottom pan of the cleaning system, where it is conveyed toward a clean grain auger. The clean grain auger conveys the grain to a grain elevator, which transports the grain upwards to a grain tank for temporary storage. The grain accumulates to the point where the grain tank is full and is discharged to an adjacent vehicle such as a semi trailer, gravity box, straight truck or the like by an unloading system on the combine that is actuated to transfer grain into the vehicle.

One particular issue with crop cultivation and harvesting is the infiltration of the field with weeds. Weed species compete with crops for nutrients, water, and sunlight and can reduce crop yields. Weed species can also complicate the harvesting operation especially as they might interfere with threshing and cleaning, and also contaminate the clean grain with weed seeds. Thus, elimination of weeds in a field remains a priority for farmers looking to maximize crop yields.

Many ways of eliminating weeds are known. While some mechanical elimination methods are known, such methods generally require a high amount of power per weed plant to eliminate. Further, it is difficult to eliminate only weed species using mechanical methods, especially when the weeds are intergrown with the crop plants.

The most widely used method today for eliminating weeds involves the use of herbicide(s) to eliminate the weed species. Some herbicides, such as glyphosates, are formulated to eliminate a wide variety of weeds, e.g., broadleaf weeds, in a field. Since herbicides can be efficiently spread throughout the field, herbicides use considerably less power to eliminate large numbers of weeds. However, using herbicides to control weeds is not without drawbacks. Herbicides might have toxic properties and must be carefully controlled to avoid negative health effects on farmers and other people in / nearby the field. Due to their possible toxic properties, residual amounts of herbicides on crops sold to consumers should be very well controlled, increasing the final cost of the crops. Many jurisdictions are also beginning to set targets for reducing herbicide use, further promoting ways to control weeds that do not involve the use of herbicides. Moreover, more and more weeds are becoming more resistant to herbicides, forcing farmers to use stronger herbicides or even rendering conventional weed control with herbicides impossible.

What is needed in the art is a way to control weeds in a field that does not rely on using herbicides.

### SUMMARY OF THE INVENTION

Exemplary embodiments provided according to the present disclosure provide a plant seed attenuation system that utilizes heat, with or without incorporating emitted light, to reduce the viability of plant seeds in plant material conveyed by a conveyor.

In some embodiments provided according to the present disclosure, a plant seed attenuation system includes a housing and a conveyor disposed in the housing and configured to convey plant material, the conveyor preferably including a rotatable shaft and at least one flighting coupled to the shaft and configured to convey plant material as the shaft rotates. A heater is associated with the conveyor and is configured to heat plant material conveyed by the conveyor to a seed attenuation temperature that is effective to reduce the viability of a plant seed conveyed by the conveyor.

In some embodiments, the plant seed attenuation system further includes a light emitter directed at the conveyor and configured to emit light having a seed attenuation wavelength that is effective to reduce the viability of the plant seed conveyed by the conveyor.

In some embodiments, the shaft and/or the at least one flighting and/or the housing includes at least one fluid passageway coupled to the heater and configured to receive heated fluid from the heater. The heater may include a heated fluid reservoir and a pump coupled to the heated fluid reservoir and configured to flow heated fluid from the heated fluid reservoir to the at least one fluid passageway.

In some embodiments, the housing is a conveyor tube and the light emitter is disposed outside of an interior of the conveyor tube. The conveyor tube may include at least one portion comprising a material that is transparent to the wavelength of the light emitted by the light emitter.

In some embodiments, the plant seed attenuation system includes a controller coupled to the heater and/or the light emitter. The controller is configured to: determine a plant species of the plant seed carried by the auger; and output a species attenuation signal to the heater and/or the light emitter to adjust the seed attenuation temperature and/or the seed attenuation wavelength based at least partially on the determined plant species. The controller may be configured to determine the plant species based at least partially on a field map stored by a memory coupled to the controller and/or on an optical signal from an optical element.

In some embodiments, the seed attenuation temperature is at least 40° C, preferably at least 60°C and even more preferably at least 80°C and/or the seed attenuation wavelength is at least partially no greater than 500 nm, preferably at least partially in the range 400 nm to 500 nm.

In some embodiments, the conveyor and the heater are each part of a combination conveyor and heater, preferably including an expeller and/or an extruder, and is configured to heat the plant material through pressure, friction, and/or shear between the heater and the plant material conveyed by the conveyor.

In some embodiments provided according to the present disclosure, an agricultural vehicle includes: a chassis; a header carried by the chassis and configured to cut and collect plant material; and a residue management system carried by the chassis and configured to distribute some of the plant material collected by the header to a field, the residue management system including the previously described plant seed attenuation system.

In some embodiments, the agricultural vehicle includes a mechanical processing unit carried by the chassis that is configured to process part of the residue and convey it to the plant seed attenuation system. The mechanical processing can include grinding, milling, crushing, rubbing, hammering, smashing, or any combination thereof.

In some embodiments, the conveyor is configured to spread the received plant material directly onto the field.

In some embodiments, the heater comprises a heat transfer system that is configured to transfer heat from at least one heated component of the agricultural vehicle to the plant material conveyed by the conveyor. This heated component of the agricultural vehicle may be a combustion engine, an electrical motor, or electrical or electronic components.

In some exemplary embodiments provided according to the present disclosure, a method of attenuating plant seeds with the previously described plant seed attenuation system and/or agricultural vehicle is provided. The method includes: providing plant material that includes at least one plant seed to the housing; conveying the provided plant material with the auger; heating the at least one plant seed, and preferably also exposing the at least one plant seed to light, to reduce the viability of the at least one plant seed.

In some embodiments, the at least one plant seed is a seed of a weed species.

One potential benefit that may be realized by exemplary embodiments provided according to the present disclosure is that the viability of plant seeds can be reduced without using herbicides or a large amount of power per seed.

Another potential benefit that may be realized by exemplary embodiments provided according to the present disclosure is that the heater and/or the light emitter can be adjusted to more efficiently reduce the viability of seeds of targeted plant species in a field and further reduce the power requirements for reducing the viability of the seeds.

Yet another potential benefit that may be realized by exemplary embodiments provided according to the present disclosure is that the plant seed attenuation system can be incorporated in an agricultural harvester to reduce the viability of plant seeds, such as seeds of weed species, that may be in residue spread by the harvester and would otherwise be difficult to effectively target with mechanical and/or chemical control methods.

Yet another potential benefit that may be realized by exemplary embodiments provided according to the present disclosure is that the heater of the plant seed attenuation system may utilize waste heat from other components of the agricultural vehicle to both cool the components as well as reduce the viability of plant seeds.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a side view of an exemplary embodiment of an agricultural vehicle in the form of a combine harvester, the agricultural vehicle including a plant seed attenuation system provided in accordance with the present disclosure;
FIG. 2 is a rear perspective view of the agricultural vehicle of FIG. 1 with a residue management system including the plant seed attenuation system illustrated in greater detail;
FIG. 3 is a perspective view of the plant seed attenuation system of FIGS. 1-2 illustrated by itself;
FIG. 4 is a cross-sectional view of the plant seed attenuation system of FIG. 3;
FIG. 5 is a perspective view of another exemplary embodiment of a plant seed attenuation system provided according to the present disclosure;
FIG. 6 is another perspective view of the plant seed attenuation system of FIG. 5;
FIG. 7 is a sectional view of an exemplary embodiment of a combination conveyor and heater that may be provided in the plant seed attenuation system of FIG. 1; and
FIG. 8 is a flow chart illustrating an exemplary embodiment of a method of attenuating plant seeds provided according to the present disclosure.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also, the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting. The terms "downstream" and "upstream" are determined with reference to the intended direction of crop material flow during operation, with "downstream" being analogous to "rearward" and "upstream" being analogous to "forward."

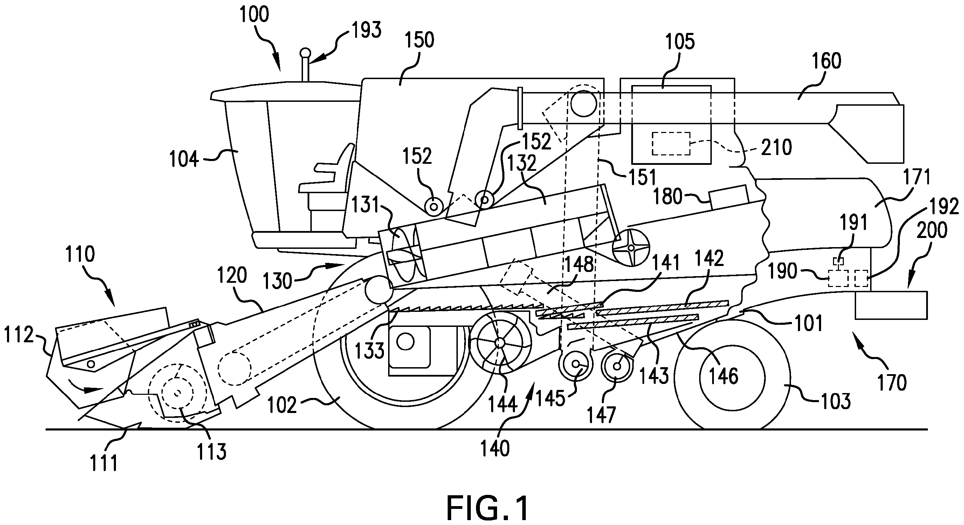

Referring now to the drawings, and more particularly to FIG. 1, there is shown an embodiment of an agricultural vehicle 100 in the form of a combine which generally includes a chassis 101, ground engaging wheels 102 and 103, header 110, feeder housing 120, operator cab 104, threshing and separating system 130, cleaning system 140, grain tank 150, and unloading conveyance 160. Front wheels 102 are larger flotation type wheels, and rear wheels 103 are smaller steerable wheels. Motive force is selectively applied to front wheels 102 through a power plant in the form of a diesel engine 105 (or other type of combustion engine) and a transmission (not shown). Although combine 100 is shown as including wheels, is also to be understood that combine 100 may include tracks, such as full tracks or half tracks.

Header 110 is mounted to the front of combine 100 and includes a cutter bar 111 for severing crops from a field during forward motion of combine 100. A rotatable reel 112 feeds the crop into header 110, and a double auger 113 feeds the severed crop laterally inwardly from each side toward feeder housing 120. Feeder housing 120 conveys the cut crop to threshing and separating system 130, and is selectively vertically movable using appropriate actuators, such as hydraulic cylinders (not shown).

Threshing and separating system 130 is of the axial-flow type, and generally includes a threshing rotor 131 at least partially enclosed by a rotor cage and rotatable within a corresponding perforated concave 132. The cut crops are threshed and separated by the rotation of rotor 131 within concave 132, and larger elements, such as stalks, leaves and the like are discharged from the rear of combine 100. Smaller elements of crop material including grain and non-grain crop material, including particles lighter than grain, such as chaff, dust and straw, are discharged through perforations of concave 132. Threshing and separating system 130 can also be a different type of system, such as a system with a transverse rotor rather than an axial rotor, etc.

Grain which has been separated by the threshing and separating assembly 130 falls onto a grain pan 133 and is conveyed toward cleaning system 140. Cleaning system 140 may include an optional pre-cleaning sieve 141, an upper sieve 142 (also known as a chaffer sieve or sieve assembly), a lower sieve 143 (also known as a cleaning sieve), and a cleaning fan 144. Grain on sieves 141, 142 and 143 is subjected to a cleaning action by fan 144 which provides an air flow through the sieves to remove chaff and other impurities such as dust from the grain by making this material airborne for discharge from a straw hood 171 of a residue management system 170 of combine 100. Optionally, the chaff and/or straw can proceed through a chopper 180 to be further processed into even smaller particles before discharge out of the combine 100 by the residue management system 170. It should be appreciated that the "chopper" 180 referenced herein, which may include knives, may also be what is typically referred to as a "beater", which may include flails, or other construction and that the term "chopper" as used herein refers to any construction which can reduce the particle size of entering crop material by various actions including chopping, flailing, etc. Grain pan 133 and pre-cleaning sieve 141 oscillate in a fore-to-aft manner to transport the grain and finer non-grain crop material to the upper surface of upper sieve 142. Upper sieve 142 and lower sieve 143 are vertically arranged relative to each other, and likewise oscillate in a fore-to-aft manner to spread the grain across sieves 142, 143, while permitting the passage of cleaned grain by gravity through the openings of sieves 142, 143.

Clean grain falls to a clean grain auger 145 positioned crosswise below and toward the front of lower sieve 143. Clean grain auger 145 receives clean grain from each sieve 142, 143 and from a bottom pan 146 of cleaning system 140. Clean grain auger 145 conveys the clean grain laterally to a generally vertically arranged grain elevator 151 for transport to grain tank 150. Tailings from cleaning system 140 fall to a tailings auger trough 147. The tailings are transported via tailings auger 147 and return auger 148 to the upstream end of cleaning system 140 for repeated cleaning action. A pair of grain tank augers 152 at the bottom of grain tank 150 convey the clean grain laterally within grain tank 150 to unloader 160 for discharge from combine 100.

In known agricultural vehicles, such as combine harvesters, plant material other than grain (MOG) is generally discharged from the vehicle. The MOG includes, among other things, stalks, chopped pieces of collected material, and other parts of collected plants that are not grain. Since weeds are often collected by the vehicle with crops, the MOG often includes parts of the weeds, such as the stalks and, more significantly, seeds.

The MOG may be discharged from the agricultural vehicle by a spreader assembly, which can include one or more discs that discharge the MOG from the back of the vehicle and onto the field. The discharged MOG can readily breakdown on the field and return nutrients to the field. However, the discharged MOG can also provide a beneficial environment for weed seeds in the discharged MOG to grow in the field. The nutrients from the breakdown of the MOG can act as fertilizer for the seeds, which may germinate and take root in the field and increase the number of weeds that are in the field. Since each seed-bearing weed tends to produce many more than one seed per plant, weeds collected by the agricultural vehicle can result in many weeds being reintroduced back into the field by the agricultural vehicle. So, harvesting might unintentionally include sowing weed.

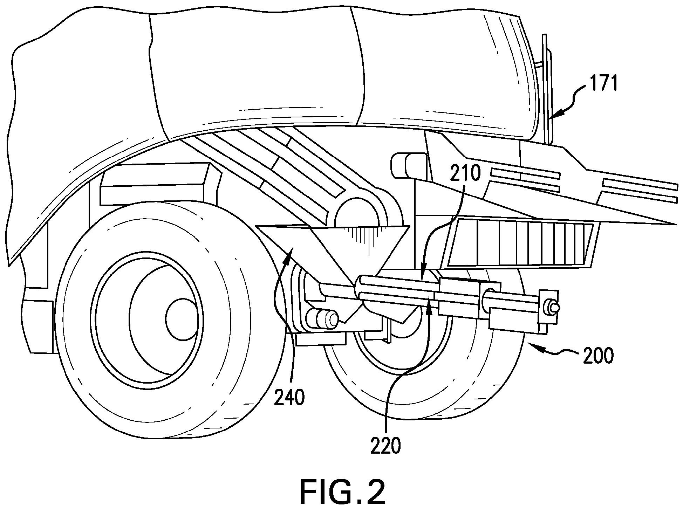

To address the previously described issues with known agricultural vehicles, and referring now to FIGS. 2-4 as well, the agricultural vehicle 100 provided according to the present disclosure includes a plant seed attenuation system 200. As illustrated, the plant seed attenuation system 200 may be part of the residue management system 170 and be disposed at a rear of the vehicle 100 in order to process MOG that has been separated from the plant material collected by the vehicle 100. In some embodiments, the plant seed attenuation system 200 discharges MOG onto the field. The plant seed attenuation system 200 may, for example, be disposed below the straw hood 171, with the straw hood 171 discharging straw and other large pieces of MOG from the vehicle 100 while the plant seed attenuation system 200 discharges smaller pieces of MOG, such as chaff, dust, and chopped plant pieces, from the vehicle 100.

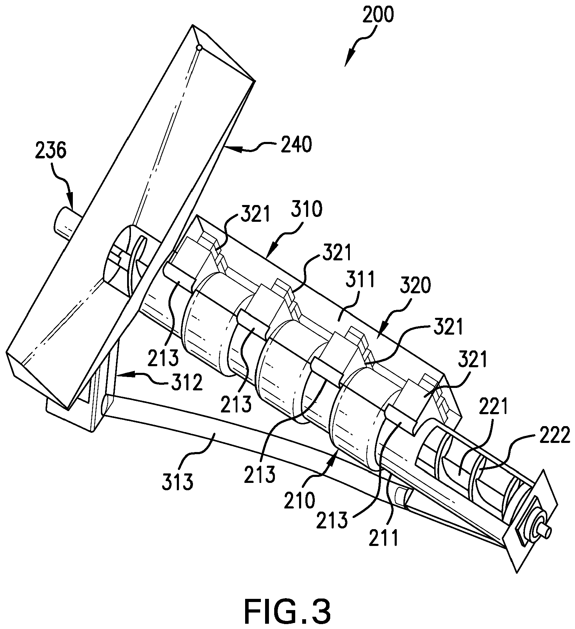

Referring specifically to FIGS. 3-4, it can be seen that the plant seed attenuation system 200 includes a housing 210 and a conveyor 220 disposed in the housing 210, with the conveyor 220 illustrated in the form of an auger, which is one preferable embodiment of the conveyor. The auger 220 includes a rotatable shaft 221 and at least one flighting 222 coupled to the shaft 221 and configured to convey plant material as the shaft 221 rotates. Many such arrangements of shafts 221 and flightings 222 are known, and it should be appreciated that any combination of shafts and flightings may be utilized according to the present disclosure. While the conveyor 220 is illustrated and described as being in the form of an auger with a shaft 221 and helical flighting 222 carried by the shaft 221, it should be appreciated that the conveyor 220 can be provided in other forms, including but not limited to an auger, a conveyor belt, a drag chain, an expeller, an extruder, etc., as will be described further herein.

The conveyor speed, e.g., rotation of the shaft 221, may be controlled by a controller 190 that is coupled to a rotator 236, such as a gearbox, coupled to the conveyor 220. Plant material may be fed to the housing 210 by a chute 240 that is configured to receive MOG from, for example, the cleaning system 140 and/or the chopper 180. In some embodiments, the vehicle 100 includes a mechanical processing unit carried by the chassis 101 that is configured to process part of the residue and convey it to the plant seed attenuation system 200. This mechanical pre-processing may increase the effectiveness of weed elimination by the plant seed attenuation system 200. It should be appreciated that while the present disclosure describes the plant material conveyed to the housing 210 as MOG that is collected along with grain from a field, the plant seed attenuation system 200 provided according to the present disclosure may be used in conjunction with other crop collecting activities including but not limited to harvesting fruits, tubers, vegetables, sugar cane, etc. It should thus be appreciated that the plant seed attenuation system 200 provided according to the present disclosure may be used in any application where it is desired to reduce the amount of weeds in a field.

The plant seed attenuation system 200 includes a heater 310 and may optionally include a light emitter 320 as well. The system 200 is configured to reduce the viability of one or more plant seeds that may be included in the plant material conveyed by the system 200. To reduce the viability of the plant seed(s) conveyed by the system 200, particularly by the conveyor 220, the heater 310 is associated with the conveyor 220 and is configured to heat plant material conveyed by the conveyor 220 to a seed attenuation temperature that is effective to reduce the viability of a plant seed conveyed by the conveyor 220. If included, the light emitter 320 is directed at the conveyor 220 and is configured to emit light having a seed attenuation wavelength that is effective to reduce the viability of the plant seed(s) conveyed by the conveyor 220. By exposing seeds carried by the conveyor 220 to heat and, optionally, one or more specific wavelengths of light, the viability of the seed(s) may be substantially reduced in a manner that does not use herbicide and also is energy efficient compared to known methods. As used herein, the seed attenuation temperature and the seed attenuation wavelength are "effective to reduce the viability of one or more plant seeds" in the sense that a plant seed, upon being exposed to the temperature and the wavelength, have a reduced probability of germinating and/or growing into a mature plant. In some embodiments, the reduced probability is at least 50%, preferably at least 75%, more preferably at least 90%, most preferably at least 95%. The reduced probability of germinating and/or growing may be determined, for example, by exposing a number of plant seeds to the seed attenuation temperature and (optionally) wavelength, attempting to germinate the exposed seeds, and comparing how many seeds result in plant sprouts compared to a control group with the same number of seeds that are not exposed to the attenuating conditions. Thus, the number of viable seeds that are reintroduced to the field by the vehicle 100 can be reduced, which can ultimately reduce the number of weeds that grow in the field.

The seed attenuation temperature and the seed attenuation wavelength may be varied in many different ways. Exemplary seed attenuation temperatures may be in, but are not limited to, the range of 40° C to 200° C, preferably 60°C to 100°C and even more preferably 80° to 100°C. A higher temperature is preferred for increased and/or faster seed attenuation, but temperatures far above 100°C are less preferred because of the risk of fire. For plant species that tend to grow in warmer climates, for example, the seed attenuation temperature may need to be higher. In some embodiments, the heater 310 is configured to controllably heat the plant material across the entire range of the seed attenuation temperatures so the heater 310 can be adjusted to reduce the viability of different plant species seeds, as will be described further herein. The heater 310 may be configured to heat the plant material conveyed by the conveyor 220 to the seed attenuation temperature by heating the shaft 221 and/or the flighting(s) 222 of the conveyor 220 and/or the housing 210 to the seed attenuation temperature, but this does not mean that the plant seed(s) carried by the auger 220 will necessarily reach the seed attenuation temperature. It should be appreciated that the seed attenuation temperature may be higher for a shorter conveyance path compared to a longer conveyance path where the seed(s) will be exposed to the elevated temperature for a longer period of time. However, care should be taken so that the seed attenuation temperature is not high enough to heat the seed(s) and/or other plant material to a temperature where the plant material chars and/or combusts, which would present a fire hazard.

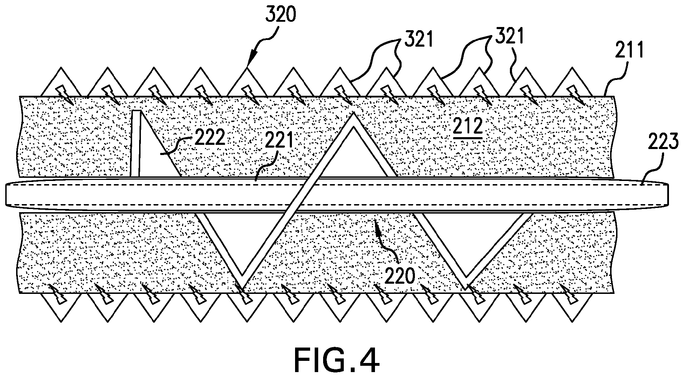

The heater 310 may be provided in a variety of configurations. In the embodiment illustrated in FIGS. 3-4, the heater 310 is configured to provide heated fluid, such as heated liquid, to the shaft 221 and the flighting 222. The shaft 221 and/or the flighting 222 may include one or more fluid passageways 223 (best illustrated in FIG. 4) that is coupled to the heater 310 and configured to receive the heated fluid from the heater 310. The heater 310 may, for example, include a heated fluid reservoir 311 and a pump 312 that is coupled to the heated fluid reservoir 311 and configured to flow heated fluid from the heated fluid reservoir 311 to the fluid passageway(s) 223. The heated fluid reservoir 311 may, for example, surround the light emitter 320, illustrated as including a plurality of light-emitting diode modules 321, so the fluid within the heated fluid reservoir 311 is heated by heat produced by the light emitter 320 while emitting light. The heated fluid can then be pumped by the pump 312 through the fluid passageway(s) 223 to a return tube 313 that is fluidly coupled to the reservoir 311 to form a closed loop system. In this respect, the heater 310 may comprise a heat transfer system that is configured to transfer heat from one or more heated components of the vehicle 100, *e.g.,* the light emitter 320, to the shaft 221 and/or the flighting 222 and/or the housing 210 to both reduce the viability of heated plant seeds and cool down one or more components of the vehicle 100. Other components of the vehicle that could provide heat are combustion engine, gearbox and electrical/electronical components producing heat. The fluid held in the reservoir 311 may be a variety of fluids, including but not limited to air, water, oil, and other heat transfer fluids. While the heater 310 is illustrated and described as providing heat via heated fluid, the heater 310 can be configured in other ways to deliver heat. For example, the heater 310 may comprise one or more resistive coils that generate heat when current flows through the coils. It should thus be appreciated that the heater 310 can provide heat for heating the seed(s) in a variety of ways.

The light emitter 320, as previously described, is configured to emit light at a seed attenuation wavelength. The seed attenuation wavelength may be light that is considered blue light and have a wavelength that is at least partially no greater than 500 nm, preferably at least partially in the range 400 nm to 500 nm. The light emitter 320 may comprise, for example, a plurality of modules 321 as previously described. In some embodiments, all of the modules 321 are configured to emit light with the same wavelength. Alternatively, one or more of the modules 321 may be configured to emit light with a wavelength that differs from one or more of the other modules 321. In some embodiments, the light emitter 320 may be configured to emit light independently from the modules 321 so some or all of the modules 321 may be selectively deactivated in order to save energy.

In the illustrated embodiment, the housing 210 comprises a conveyor tube 211 and the light emitter 320 is disposed outside of an interior 212 of the conveyor tube 211 in which the auger 220 is disposed. When the light emitter 320 is disposed outside of the conveyor tube 211, the conveyor tube 211 may include one or more portions 213 comprising a material that is transparent to the wavelength(s) of the light emitted by the light emitter 320 so the light emitted from the light emitter 320 can travel into the interior 212 so the plant material is exposed to the light. Preferably, the conveyor tube 211 is insulated where possible to contain the heat. As used herein, material is "transparent" to the wavelength of the light if at least 50% of the light emitted by the light emitter 320 can pass through the material. The material of the portion(s) 213 may be, for example, a glass or polymer. When the light emitter 320 includes multiple modules 321, each module 321 may be coupled to and directed at a respective one of the portions 213, with each portion 213 comprising a material that is transparent to the light emitted by the respective module 321. It should thus be appreciated that the light emitter 320 and the housing 210 can be configured in a variety of ways so plant material conveyed by the auger 220 is exposed to light with the seed attenuation wavelength.

It may be beneficial to adjust the seed attenuation temperature and/or the seed attenuation wavelength to target the seeds of specific plant species in the plant material conveyed by the auger 220. For example, some fields may have a large number of plants of a particular weed species growing that are desired to be eliminated. Some common weed species that may be targeted include, but are not limited to, black-grass, goose foot, wild oats, chickweed, pigweed, thistle, etc. To target one or more specific plant species, the controller 190 may also be operably coupled to the heater 310 and the light emitter 320 and be configured to output a species attenuation signal to the heater 310 and/or the light emitter 320 to adjust the seed attenuation temperature and/or the seed attenuation wavelength. In some embodiments, the controller 190 is configured to determine a plant species of the plant seed that is carried by the auger 220 and output the plant attenuation signal based at least partially on the determined plant species. The controller 190 may be configured to determine the plant species in a variety of ways. In some embodiments, the controller 190 may be configured to determine the plant species based at least partially on a field map stored by a memory 191 coupled to the controller 190 and/or on an optical signal from an optical element 192 carried by the vehicle 100. As optical element, a camera could be used, for example in combination with known image processing techniques to detect the presence of weed, for example by color, as weed is often green which contrasts with crops like wheat, or by height, as weed is often growing taller than the crop, or by shape, for example by distinguishing different shape of leaves.

The field map may, for example, be utilized by the controller 190 in tandem with a location sensor 193, such as a global positioning satellite (GPS) sensor, so the controller 190 can determine where the vehicle 100 is in the field based on the field map. The field map may also indicate one or more regions of the field that are inhabited by one or more plant species other than grain, such as the previously described weed species. For example, the field map may indicate a region of the field that is inhabited by a high number of plants of species X, which may be input into the field map based on historical data. The field map can be based on historic data, for example based on data collected during previous harvesting operations or other field operations, or can be based on satellite or aerial images. The controller 190 may be configured to determine when the vehicle 100 is approaching and/or enters the region of the field to determine that the plant seeds carried by the auger 220 have a higher probability of being from species X. It should be appreciated that the controller 190 may also be configured to determine that more than one plant species is likely to be present in the region of the field. The controller 190 may then determine the seed attenuation temperature and/or the seed attenuation signal that is effective to reduce the viability of seeds of plant species X from a lookup table stored in the memory 191. If there are multiple plant species to attenuate, the controller 190 may be configured to determine a common seed attenuation temperature and/or seed attenuation wavelength that is effective to reduce the viability of the determined plant species that are present. The controller 190 may then output the species attenuation signal to the heater 310 and/or the light emitter 320 to adjust the heater 310 and/or the light emitter 320 so the output heat and/or light wavelength are efficient to reduce the viability of the seeds of the one or more determined plant species.

Alternatively or additionally, the controller 190 may be configured to utilize optical/image recognition to determine the plant species. The controller 190 may be configured to receive one or more images from the optical element 192 and determine one or more plant species that are present in the image. The controller 190 may then output the species attenuation signal based at least partially on the one or more plant species that are determined to be present in the image. Alternatively or additionally, the controller 190 may also be configured to receive input, *e.g*., from an operator, corresponding to one or more plant species to be attenuated and determine the plant species based on the input and output the species attenuation signal. In some embodiments, the controller 190 may also be configured to output a signal that controls the rotational speed of the shaft 221, *e.g*., by controlling the gearbox 230, to control how long the plant material conveyed by the auger 220 is exposed to the heat and light from the heater 310 and the light emitter 320. For example, the controller 190 may be configured to determine an exposure duration of the plant seed(s) to the heat and the light that is needed to reduce the viability of the seed(s) and output the appropriate signal to the gearbox 230 that adjusts the rotation speed of the shaft 221 so the plant material is exposed to the heat and light for the exposure duration. It should thus be appreciated that the controller 190 may be configured in a variety of ways to determine the plant species to be targeted and output the appropriate signals to efficiently reduce the viability of the seed(s) of the targeted plant species.

In some embodiments, the controller 190 may also be configured to determine that a region of the field does not have a threshold amount of plants, such as weeds, and deactivate the heater 310 and/or the light emitter 320. For example, the field map may indicate that a region of the field has not historically had weeds present and thus does not need to be exposed to heat and light from the heater 310 and the light emitter 320, respectively. If the heater 310 is also used as a heat transfer system, the controller 190 may be configured to selectively deactivate the light emitter 320 without adjusting the heater 310 so the heat transfer continues. The controller 190 may also be configured to determine that one or more plant species is absent from the images captured by the optical element 192 and deactivate the heater 310 and/or the light emitter 320 based on this determination. It should thus be appreciated that the controller 190 can be configured to also conserve energy by deactivating the heater 310 and/or the light emitter 320 when there is unlikely to be a need for seed attenuation.

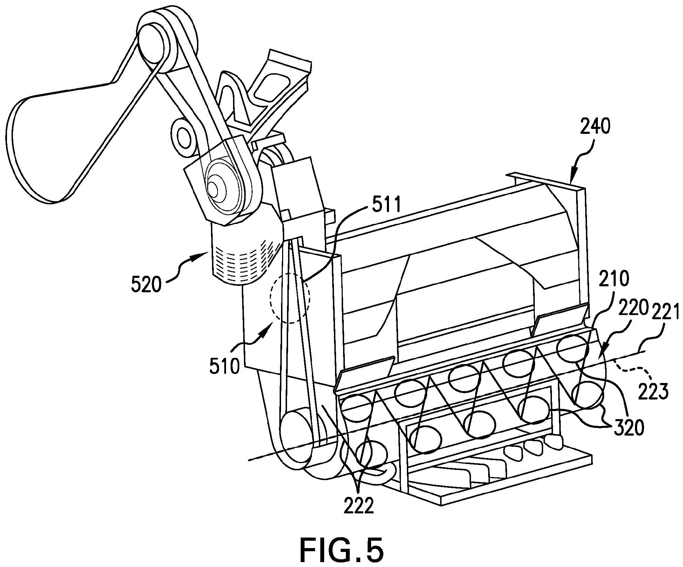

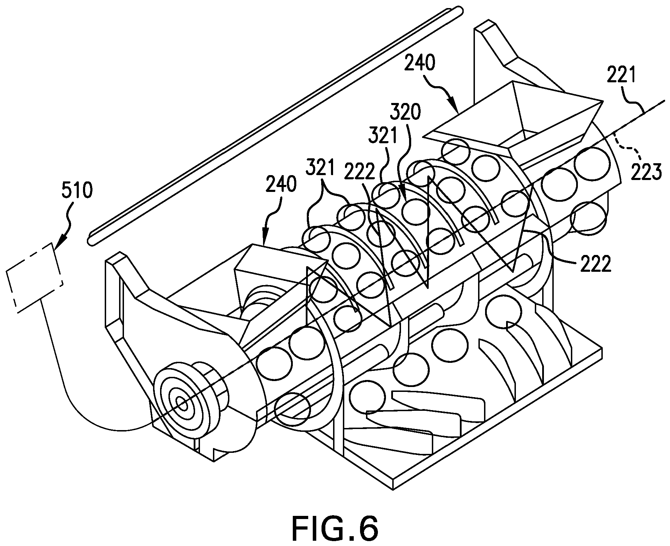

Referring now to FIGS. 5-6, another exemplary embodiment of a heater 510 provided according to the present disclosure is illustrated. Unlike the previously illustrated heater 310, which is configured to transfer heat from the light emitter 320, the heater 510 is configured to transfer heat from a different heated component, illustrated as a cooling radiator 520 that may itself draw heat from a different component such as the combustion engine 105. Similarly to the previously described heater 310, the heater 510 of FIGS. 5-6 can include a pump 511 that is configured to flow heated fluid from the heated component (radiator 520) in order to heat up the plant material by providing the heated fluid to the passageway(s) 223 to heat the housing 210 and/or the shaft 221 and/or the flighting(s) 222 to the seed attenuation temperature. It should be appreciated that the heater 510 can draw heat from other heated components of the vehicle 100, including but not limited to an electrical motor or an electrical or electronic component. In some embodiments, the heater 510 includes a further heating element, e.g., as part of the pump 511, that can further heat the pumped fluid if the heated fluid temperature is not at a defined fluid temperature. The further heating element may comprise a resistive heating element that creates heat from current flow and can be activated by the controller 190 when, for example, a thermocouple at the pump 511 (or elsewhere) measures the heated fluid to be below the defined fluid temperature. In other respects, the heater 510 may be similar to the previously described heater 310. As illustrated in FIG. 6, it should also be appreciated that the plant seed attenuation system 200 may be fed with plant material by more than one chute, such as two chutes 240.

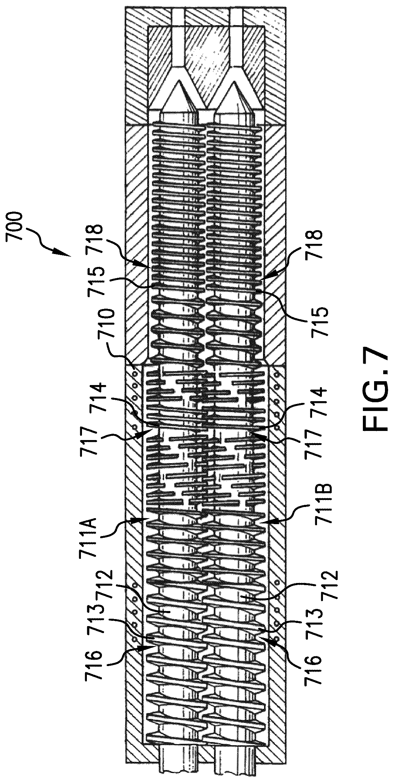

While the previously described heaters 310, 510 are illustrated and described as heating the plant material conveyed by the conveyor 220 using heated fluid, it should be appreciated that the heaters provided according to the present disclosure can heat the plant material in other ways, e.g., through friction and/or pressure and/or shear. Referring now to FIG. 7, an exemplary embodiment of a combination conveyor and heater 700 provided according to the present disclosure is illustrated that may be used in the plant seed attenuation system 200 instead of the previously described heaters 310, 510 and conveyor 220. In the illustrated embodiment, the conveyor and heater 700 includes a pair of extrusion screws 711A, 711B that are in close proximity to one another within a housing 710 and each include a respective shaft 712 and flightings 713, 714, 715. In this respect, the extrusion screws 711A, 711B may be similar to the previously described auger conveyor 220 but, in some embodiments, may have different flighting sections 716, 717, 718 that include the flightings 713, 714, 715, with the flightings 713, 714, 715 having different configurations in the different sections 716, 717, 718. Extrusion screws are well known in the plastics industry, where extruders are fed with plastic granules and output a homogenous hot paste of plastic, ready to use in for example injection molding. The extruder takes in the plastic granules, heats up the granules by internal friction and shearing as they are squeezed and transported by the screws, homogenizes the softened plastic by mixing it and outputs a hot homogenous plastic paste. Often the extruder barrel is also heated to provide additional heating to the plastic. Plastic extruders are typically single screw or double screw extruders. Similar extruders can also be used to extract vegetable oils from seeds. In that case, the extruder is fed with the seeds (for example flax seed, rapeseed, ..), the seeds are being transported by the screws, the seeds are broken down by internal friction and shearing, releasing the oil from the seeds, the oil can be tapped from the screw and the remainder of the seeds comes out like a paste. A simple type of a single screw machine with the purpose of extracting oil from seeds is also called an expeller. The extrusion screws 711A, 711B are configured to rotate so the flightings 713, 714, 715 convey plant material along the shafts 712, which pressurizes the conveyed plant material and creates shear and internal friction. The combination of the pressure and shear on the conveyed plant material, as well as the high frictional forces, creates a large amount of heat that heats the conveyed plant material, which may include one or more plant seeds, to a seed attenuation temperature to reduce the viability of the seed(s) conveyed by the extrusion screws 711A, 711B. The extrusion screws 711A, 711B work in tandem to heat the plant material conveyed through pressure, friction, and/or shear between the extrusion screws 711A, 711B. The heating temperature of the plant material by the extrusion screws 711A, 711B may be controlled, for example, by adjusting the rotation speed of the shafts 712, and/or by adjusting the distance between the shafts 712 of the extrusion screws 711A, 711B and/or the extruder barrel, and/or the specific design of the screws and the screws sections (Fig.7 shows extrusion screws with different sections). Optionally, the light emitter 320 may be directed at one or both of the extrusion screws 711A, 711B to expose conveyed plant seeds to light with the seed attenuation wavelength and attenuate the plant seed(s). Further optionally, the housing 710, one or both of the shafts 712, and/or one or more of the flightings 713, 714, 715 can be provided with one or more fluid passageways that are fluidly coupled to a source of heated fluid, e.g., fluid carrying waste heat from another component of the agricultural vehicle 100, to further heat the conveyed plant material. So a combination conveyor and heater may be provided in the form of an expeller or an extruder, a single or double screw extruder, acting both as a conveyor and a as a heater, that conveys plant material, generate heat in the plant material and heat the conveyed plant material to the seed attenuation temperature as the plant material is pushed towards the exit of the expeller or extruder. Some possible advantages of using an expeller or extruder to heat the plant material is that the expeller(s) and/or extruder(s) are mechanically driven and can create heating without the need for separate heating and also create the heat directly in the bulk of the plant material. Such an expeller or extruder is particularly useful to heat up material homogenously and fast, even material with poor thermal conductivity (like plastic, but MOG and/or weed seeds also) whereas conventional heating of material requires higher temperatures of the heating element resulting in inhomogeneous heating of the material, so that in some places the temperatures might be to high, causing fire hazards, and in some places the temperature might still be to low, reducing the effectiveness of the seed attenuation. In addition to the heating in the expeller/extruder, the shearing and friction, and also the increased pressure contributes to breaking down the weed seeds and so attenuating the weed seeds. It should thus be appreciated that the heater provided according to the present disclosure may heat the conveyed plant material in a variety of ways and may work in tandem with the conveyor in order to do so.

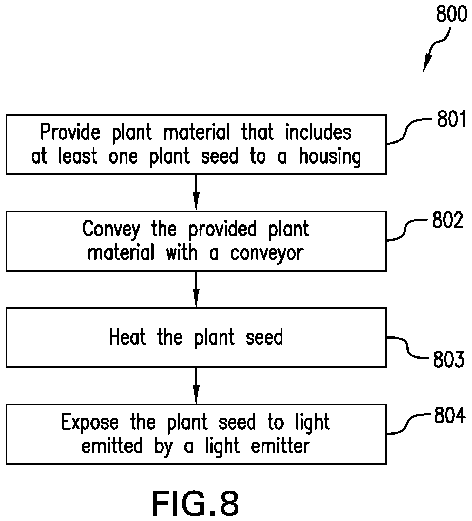

Referring now to FIG. 8, an exemplary embodiment of a method 800 of attenuating plant seeds with the plant seed attenuation system 200 and/or the vehicle 100 is illustrated. The method 800 includes providing 801 plant material that includes at least one plant seed to the housing 210, 710; conveying 802 the provided plant material with the conveyor 220, 711A, 711B; and heating 803 the at least one plant seed, and preferably also exposing 804 the at least one plant seed to light, to reduce the viability of the at least one plant seed. The heating 803 may be done with any of the previously described heaters 210, 510, 711A, 711B and the exposing 804 may be done with the previously described light emitter 320. While the previously disclosed light emitter 320 is described as being directed towards the conveyor 220, 711A, 711B, in some embodiments the light emitter 320 may be directed at the plant material before or after the plant material is carried by the conveyor 220, 711A, 711B, e.g., as the plant material is being fed to the housing 210, 710. The heating 803 and/or the preferable exposing 804 should last for a duration that is effective to reduce the viability of the at least one plant seed, which may depend on the plant species. Preferably the settings for heating 803 and/or exposing 804 are chosen so that this duration is less than one minute, preferably less than 30 seconds and even more preferably less than 10 seconds. The plant seed(s) may be a seed of a weed species, as previously described.

From the foregoing, it should be appreciated that the plant seed attenuation system 200 can be used to efficiently reduce the viability of plant seeds, such as weed seeds, without using herbicides. The plant seed attenuation system 200 can use an approach that heats the plant material, including the seeds, inside the housing 210, 710 while optionally exposing the plant material to light from the light emitter 320 that is emitted from outside the housing 210, 710. By using such an approach, the plant material/seeds can be exposed to both the heat and light almost continuously during conveyance by the conveyor 220, 711A, 711B so the exposure is efficient. Further, the heat can originate as waste heat from one or more components of the vehicle 100 in order to reduce the amount of power that must be utilized to generate the heat. Even further, the controller 190 can be configured in a variety of ways to adjust the heater 310, 510, 711A, 711B and/or the light emitter 320 so the exposure efficiently targets the plant seed(s) carried by the conveyor 220, 711A, 711B and deactivate the heater 310, 510, 711A, 711B and/or the light emitter 320 when they are not needed, further increasing the efficiency of the plant seed attenuation system 200. Therefore, the plant seed attenuation system 200 provided according to the present disclosure can efficiently reduce the viability of plant seeds in an agricultural vehicle 100 or elsewhere and in a manner that does not substantially hamper crop harvesting.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein, but is intended to include all changes and modifications that are within the scope and spirit of the invention.

## Claims

1. A plant seed attenuation system (200), comprising:
a housing (210, 710); and
a conveyor (220, 711A, 711B) disposed in the housing (210, 710) and configured to convey plant material, the conveyor (220, 711A, 711B) preferably comprising a rotatable shaft (221, 712) and at least one flighting (222, 713, 714, 715) coupled to the shaft (221, 712) and configured to convey plant material as the shaft (221, 712) rotates;
**characterized by:**
a heater (310, 510, 711A, 711B) associated with the conveyor (220, 711A, 711B) that is configured to heat plant material conveyed by the conveyor (220, 711A, 711B) to a seed attenuation temperature that is effective to reduce the viability of a plant seed conveyed by the conveyor (220, 711A, 711B).

2. The plant seed attenuation system (200) of claim 1, further comprising a light emitter (320) directed at the conveyor (220, 711A, 711B) and configured to emit light having a seed attenuation wavelength that is effective to reduce the viability of the plant seed conveyed by the conveyor (220, 711A, 711B).

3. The plant seed attenuation system (200) of claim 1 or claim 2, wherein the shaft (221) and/or the at least one flighting (222) and/or the housing (210) comprises at least one fluid passageway (223) coupled to the heater (310, 510) and configured to receive heated fluid from the heater (310, 510).

4. The plant seed attenuation system (200) of claim 3, wherein the heater (310, 510) comprises a heated fluid reservoir (311) and a pump (312) coupled to the heated fluid reservoir (311) and configured to flow heated fluid from the heated fluid reservoir (311) to the at least one fluid passageway (223).

5. The plant seed attenuation system (200) of any one of claims 2 to 4, wherein the housing (210) comprises a conveyor tube (211) and the light emitter (320) is disposed outside of an interior (212) of the conveyor tube (211).

6. The plant seed attenuation system (200) of claim 5, wherein the conveyor tube (211) comprises at least one portion (213) comprising a material that is transparent to the wavelength of the light emitted by the light emitter (320).

7. The plant seed attenuation system (200) of any one of the preceding claims, further comprising a controller (190) coupled to the heater (310, 510, 711A, 711B) and/or the light emitter (320), the controller (190) being configured to:
determine a plant species of the plant seed conveyed by the conveyor (220, 711A, 711B); and
output a species attenuation signal to the heater (310, 510, 711A, 711B) and/or the light emitter (320) to adjust the seed attenuation temperature and/or the seed attenuation wavelength based at least partially on the determined plant species.

8. The plant seed attenuation system (200) of claim 7, wherein the controller (190) is configured to determine the plant species based at least partially on a field map stored by a memory (191) coupled to the controller (190) and/or on an optical signal from an optical element (192).

9. The plant seed attenuation system (200) of any one of the preceding claims, wherein the seed attenuation temperature is at least 40° C, preferably at least 60°C and even more preferably at least 80°C, and/or the seed attenuation wavelength is at least partially no greater than 500 nm, preferably at least partially in the range 400 nm to 500 nm.

10. The plant seed attenuation system (200) of any one of the preceding claims, wherein the conveyor (711A, 711B) and the heater (711A, 711B) are each part of a combination conveyor and heater (700), preferably comprising an expeller or an extruder (711A, 711B) configured to heat the plant material through pressure, friction, and/or shear as the plant material is conveyed by the conveyor (711A, 711B).

11. An agricultural vehicle (100), comprising:
a chassis (101);
a header (110) carried by the chassis (101) and configured to cut and collect plant material; and
a residue management system (170) carried by the chassis (101) and configured to distribute some of the plant material collected by the header (110) to a field, the residue management system (170) including the plant seed attenuation system (200) of any one of the preceding claims.

12. The agricultural vehicle (100) of claim 11, further comprising a mechanical processing unit carried by the chassis (101) that is configured to process at least part of the residue and convey it to the plant seed attenuation system (200).

13. The agricultural vehicle (100) of claim 11 or claim 12, wherein the conveyor (220, 711A, 711B) is configured to spread the received plant material directly onto the field.

14. The agricultural vehicle (100) of any one of claims 11 to 13, wherein the heater (310, 510) comprises a heat transfer system that is configured to transfer heat from at least one heated component (105, 320, 321, 520) of the agricultural vehicle (100) to the plant material conveyed by the conveyor (220).

15. A method (800) of attenuating plant seeds with the plant seed attenuation system (200) of any one of claims 1 to 10 and/or with the agricultural vehicle (100) of any one of claims 11 to 14, the method (800) comprising:
providing (801) plant material that includes at least one plant seed to the housing (210, 710);
conveying (802) the provided plant material with the conveyor (220, 711A, 711B); and
heating (803) the at least one plant seed, and preferably also exposing (804) the at least one plant seed to light, to reduce the viability of the at least one plant seed.
